# FASCICULE DE BREVET EUROPEEN

(11) **EP 1 844 282 B1**
(45) Date de publication et mention de la délivrance du brevet: **17.04.2013**
(21) Numéro de dépôt: 06709424.3
(22) Date de dépôt: 23.01.2006
(51) Int. Cl.: F25J 3/02, B01D 53/04

(54) **PROCEDE DE PRODUCTION DE MONOXYDE DE CARBONE PAR DISTILLATION CRYOGENIQUE**
VERFAHREN ZUR ERZEUGUNG VON KOHLENMONOXID DURCH KRYOGENE DESTILLATION
METHOD FOR PRODUCING CARBON MONOXIDE BY CRYOGENIC DISTILLATION

(30) Priorité: 25.01.2005 FR 0550206
(43) Date de publication de la demande: 17.10.2007
(73) Titulaire: L'AIR LIQUIDE, Société Anonyme pour l'Etude et l'Exploitation des Procédés Georges Claude, 75321 Paris Cedex 07 (FR)
(72) Inventeur: TEIXEIRA, Guillaume, F-75012 Paris (FR); PEYRON, Jean-marc, F-94000 Creteil (FR); RAUCH, Jean-françois, F-94340 Joinville-le-Pont (FR); HAIK-BERAUD, Natacha, F-94500 Champigny-sur-Mame (FR); BILLY, Jean, F-94420 Le Plessis Trevise (FR)
(74) Mandataire: Mercey, Fiona Susan
(86) Numéro de dépôt international: PCT/FR2006/050039
(87) Numéro de publication internationale: WO 2006/079736

(56) Documents cités:
- EP-A- 1 245 533
- EP-A- 1 479 989
- DE-A1- 3 631 332

## Description

La présente invention est relative à un procédé de production de monoxyde de carbone par distillation cryogénique.

Le mélange gazeux destiné à être séparé dans un procédé de production de monoxyde de carbone et/ou d'hydrogène par distillation cryogénique doit être épuré pour enlever l'humidité et les traces de dioxyde de carbone susceptibles de geler à des températures basses et ainsi de boucher les échangeurs de la boîte froide.

Le piégeage de l'eau et du dioxyde de carbone est classiquement réalisé par passage du gaz de charge à travers une unité de dessiccation contenant divers adsorbants, parmi lesquels du tamis moléculaire.

Or, le tamis moléculaire a la propriété d'adsorber des quantités significatives de monoxyde de carbone. Ceci se répercute de façon notable sur le débit de production au début de chaque cycle d'adsorption, aussi longtemps que le tamis n'est pas saturé en monoxyde de carbone. Ces fluctuations de production peuvent être néfastes pour les unités en aval.

Une contre-mesure décrit dans WO-A-03/049839 consiste à faire précéder chaque cycle d'adsorption par une séquence dite d'élution, au cours de laquelle le lit d'adsorbant est progressivement saturé en monoxyde de carbone, ce qui permet de réaliser un certain lissage du creux observé sur la production. Par phase d'élution, il faut entendre une phase au cours de laquelle un des adsorbants ne reçoit qu'une faible fraction du débit à épurer, par exemple entre 2 et 10 % mol. du débit à épurer.

Des contre-mesures supplémentaires au niveau de la boîte froide sont décrites dans EP-A-1479989 : par exemple l'utilisation de la capacité de monoxyde de carbone liquide comme volume-tampon. Le monoxyde de carbone accumulé hors élution est ainsi revaporisé dans la ligne d'échange pendant l'élution pour compenser la perte aux sécheurs. Malheureusement, les essais effectués en ce sens ont révélé une mise en oeuvre difficile, qui s'explique par un déséquilibre du bilan frigorifique. Le document décrit un procédé selon le préambule de la revendication 1.

L'invention consiste à utiliser une capacité-tampon localisée en cuve de la colonne de lavage. A ce niveau de la boîte froide, le monoxyde de carbone est présent dans une fraction de gaz de synthèse liquéfié, que l'on accumule en dehors des périodes d'élution. Lorsque l'élution aux sécheurs se produit, la capacité-tampon est déstockée, ce qui permet de stabiliser le débit de production de monoxyde de carbone.

Pendant la phase d'accumulation de gaz de synthèse liquéfié en cuve de la colonne de lavage, la rétention de méthane liquide en cuve de la colonne de séparation de monoxyde de carbone et de méthane est progressivement réduite. Au contraire, pendant la phase d'élution, le déstockage de gaz de synthèse liquéfié est compensé par une augmentation de la rétention de méthane liquide. Si nécessaire, on pourra également jouer sur le niveau de la colonne d'épuisement et sur le débit de méthane vaporisé dans l'échangeur.

Le premier avantage de cette invention est qu'elle préserve l'équilibre du bilan frigorifique, grâce au maintien global des inventaires de liquide cryogénique à travers la boîte froide. La régulation de la turbine de monoxyde de carbone peut assurer le rebouclage exact du bilan frigorifique.

Le deuxième avantage de cette invention est qu'elle permet de maintenir un débit partiel de monoxyde de carbone constant dans les colonnes de flash et de séparation de monoxyde de carbone et de méthane. Ceci est bénéfique du point de vue de la stabilité opératoire. Mais on peut aussi imaginer de jouer sur une capacité de CO (celle en tête de colonne CO/CH₄ par exemple), à la place de la rétention de gaz de synthèse en cuve de colonne de lavage.
i) Selon un premier objet de l'invention, il est prévu un procédé selon la revendication 1.

Selon d'autres aspects facultatifs de l'invention :
- la capacité est constituée par la partie inférieure d'une colonne de séparation cryogénique.
- le niveau de mélange gazeux liquéfié contenu dans la capacité augmente pendant tout le cycle en dehors de la phase d'élution et/ou le niveau de mélange gazeux liquéfié contenu dans la capacité baisse uniquement pendant les phases d'élution.
- le mélange gazeux contient au moins du monoxyde de carbone, de l'hydrogène et du méthane, une partie du mélange gazeux épuré est envoyé à une colonne de lavage au méthane, un gaz enrichi en hydrogène est soutiré en tête de la colonne de lavage au méthane, un liquide enrichi en monoxyde de carbone est envoyé de la colonne de lavage au méthane en tête d'une colonne d'épuisement, un liquide riche en monoxyde de carbone est soutiré en cuve de la colonne d'épuisement et envoyé à une colonne de séparation de monoxyde de carbone et de méthane, un liquide riche en méthane est soutiré en cuve de la colonne de séparation de monoxyde de carbone et de méthane et envoyé au moins en partie en tête de la colonne de lavage au méthane et un débit gazeux riche en monoxyde de carbone est soutiré de la tête de la colonne de séparation de monoxyde de carbone et de méthane.
- du mélange gazeux liquéfié est envoyé de la capacité à la colonne d'épuisement.
- le volume de liquide riche en méthane dans la cuve de la colonne de séparation de monoxyde de carbone et de méthane diminue pendant au moins une partie du cycle en dehors des phases d'élution et ce volume augmente pendant au moins une partie des phases d'élution.
- le volume de liquide riche en monoxyde de carbone dans la cuve de la colonne d'épuisement diminue pendant au moins une partie du cycle en dehors des phases d'élution et/ou ce volume augmente pendant au moins une partie des phases d'élution.

L'invention sera décrite en plus de détail en se référant aux figures où la Figure 1 représente un premier procédé de production de monoxyde de carbone et d'hydrogène selon l'invention, les Figure 2 et 3 représentent la variation des niveaux dans le stockage et dans la cuve de la colonne de CO/CH₄ pendant le cycle T et la Figure 4 représente un deuxième procédé de production de monoxyde de carbone et d'hydrogène selon l'invention.

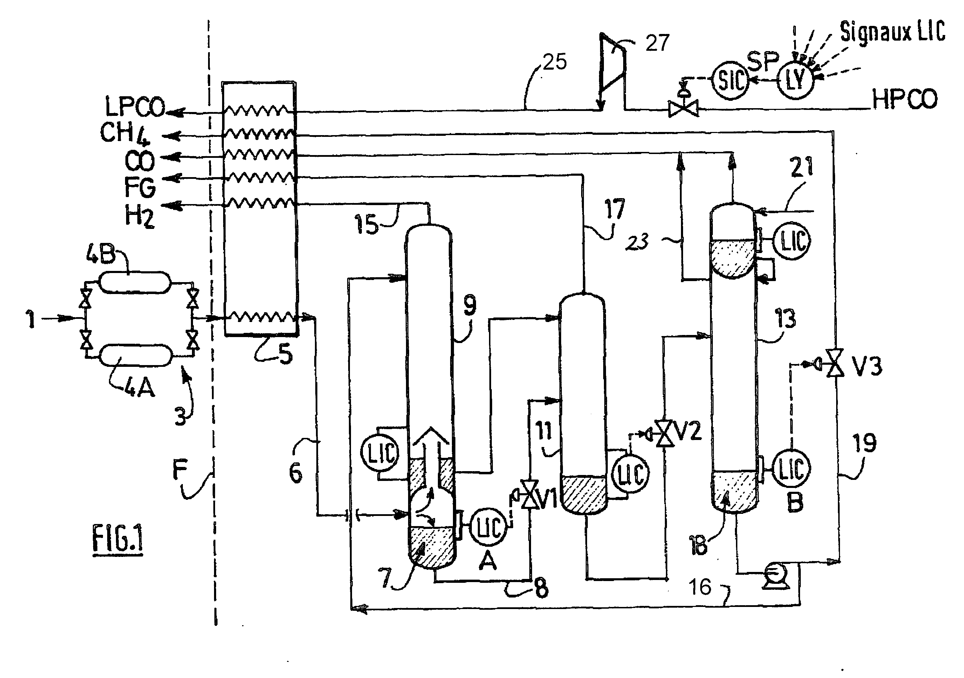

Dans la Figure 1, un débit de gaz de synthèse 1 est envoyé à une unité d'épuration 3 pour éliminer la majorité des impuretés, notamment l'eau et le dioxyde de carbone. Ce mélange gazeux comporte comme constituants principaux de l'hydrogène et du monoxyde de carbone ainsi qu'éventuellement des constituants secondaires, tels que l'azote et du méthane et contient comme impuretés de l'eau et du dioxyde de carbone.

L'unité 3 comporte deux adsorbeurs 4A, 4B mis en ligne de façon alternée pour assurer l'épuration par adsorption du mélange gazeux. Chaque adsorbeur comporte un matériau adsorbant disposé sous forme de lit. L'adsorbeur qui ne sert pas à l'adsorption est régénéré avec un gaz, provenant éventuellement de l'unité de distillation cryogénique. Lors d'une première étape, dite phase d'élution, l'adsorbeur 4A ne reçoit qu'une fraction du débit à épurer, environ 5% du débit, le reste du débit étant envoyé à l'adsorbeur 4B. Quand l'adsorbeur 4A est saturé en monoxyde de carbone, on passe à une deuxième étape où les deux adsorbeurs 4A, 4B reçoivent 50% du débit à épurer. Ensuite dans une troisième étape, l'adsorbeur 4A est en phase d'adsorption alors que l'adsorbeur 4B est en phase de régénération. Lors d'une quatrième étape, l'adsorbeur 4A est en fin de phase d'adsorption et l'adsorbeur 4B passe en phase d'élution, l'adsorbeur 4A recevant 95% du débit à épurer et l'adsorbeur 4B recevant 5% du débit jusqu'à ce que l'adsorbeur 4B soit saturé en monoxyde de carbone. Dans une cinquième étape, les deux adsorbeurs reçoivent 50% du mélange gazeux à épurer et dans la sixième et dernière étape, l'adsorbeur 4B adsorbe alors que l'adsorbeur 4A est régénéré.

Ainsi dans un cycle, s'il y a N adsorbeurs, il y aura N phases d'élution de sorte que chaque adsorbeur se sature en monoxyde de carbone avant d'adsorber les impuretés du débit entier à épurer.

Pendant les étapes d'élution, à cause de la rétention de monoxyde de carbone, le débit de mélange gazeux envoyé à la distillation baisse d'environ 1%.

Le gaz saturé envoyé à la boîte froide F est ensuite refroidi dans un échangeur 5 d'où il sort partiellement liquéfié. Le débit est ensuite envoyé dans une capacité 7 en dessous d'une colonne de lavage au méthane 9. La vapeur de la capacité 7 arrive dans la cuve de la colonne de lavage 9. Le liquide contenu dans la capacité est envoyé pendant tout le cycle à une colonne d'épuisement à un niveau intermédiaire, le haut de la colonne d'épuisement étant alimenté par le liquide de cuve de la colonne de lavage au méthane. Un détecteur de niveau de liquide dans la capacité pilote l'ouverture de la vanne V1 amenant le liquide vers la colonne d'épuisement 11. Un gaz riche en hydrogène 15 est soutiré en tête de la colonne de lavage au méthane 9 et se réchauffe dans l'échangeur 5.

La capacité 7 peut être intégrée avec la colonne de lavage 9 comme illustré, séparée de celui-ci ou constituée par la cuve de la colonne de lavage 9.

Un liquide riche en méthane est soutiré en cuve de la colonne d'épuisement 11 et envoyé à un niveau intermédiaire de la colonne de séparation de méthane et de monoxyde de carbone 13. Un détecteur de niveau de liquide dans la cuve de la colonne d'épuisement 11 pilote l'ouverture de la vanne V2 amenant le liquide vers la colonne CO/CH₄ 13.

Un gaz riche en hydrogène 17 est soutiré en tête de la colonne d'épuisement 11. Ce fluide dénommé FG se réchauffe dans l'échangeur 5.

Le liquide de cuve de la colonne CO/CH₄ 13 est pompé et envoyé en partie 16 vers la tête de la colonne de lavage de méthane et en partie 19 à la production comme liquide riche en méthane par une vanne V3 piloté par le niveau de la cuve 18 de la colonne CO/CH₄. La tête de la colonne CO/CH₄ est refroidie à l'aide d'un cycle de monoxyde de carbone 21 de manière connue. Le gaz riche en monoxyde de carbone 23 est soutiré en tête de la colonne CO/CH₄ et se réchauffe dans l'échangeur 5.

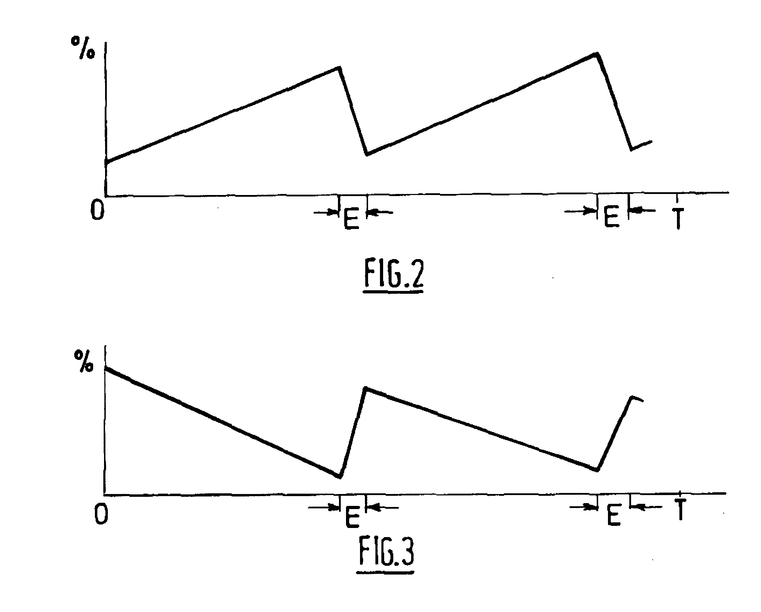

En dehors des phases d'élution, le débit gazeux épuré 6 envoyé à la colonne de lavage au méthane est constant. Au moins pendant que l'un des absorbeurs est en phase d'adsorption et l'autre est en phase de régénération, le débit 8 sortant de la capacité 7 est régulé de sorte que le niveau de liquide augmente, comme on le voit sur la Figure 2. Pendant les phases d'élution, le débit de mélange gazeux épuré 6 diminue et ce débit 6 est appauvri en monoxyde de carbone par rapport au débit pendant le reste du cycle. Le soutirage du liquide 8 est augmenté et au moins pendant une partie de chaque phase d'élution, de préférence au début de chaque phase d'élution, de sorte que le niveau de liquide dans le stockage baisse. Ce niveau remontera à nouveau à partir de l'étape suivante, lorsque le débit de gaz à traité sera réparti à 50% entre les adsorbeurs 4A et 4B, et par la suite au moins pendant que l'un des adsorbeurs est en phase d'adsorption.

De cette manière, l'envoi de liquide supplémentaire du stockage pendant au moins une partie de chaque phase d'élution compense l'appauvrissement en monoxyde de carbone du mélange gazeux envoyé à la distillation cryogénique pendant les phases d'élution.

Pour équilibrer le bilan frigorifique, le niveau de liquide en cuve 18 de la colonne CO/CH₄ est régulé de sorte qu'il augmente pendant les phases d'élution alors qu'il baisse pendant le reste du cycle, comme l'on voit à la Figure 3.

Il est également possible de remplacer ou de supplémenter ce moyen d'équilibrage en régulant au moins une des caractéristiques suivantes:
- le niveau de liquide dans la colonne d'épuisement.
- le niveau de liquide dans la colonne de lavage au méthane.
- la vitesse de la turbine 27 du cycle de monoxyde de carbone 25.

De cette façon, il est possible de produire un débit de monoxyde de carbone substantiellement constant.

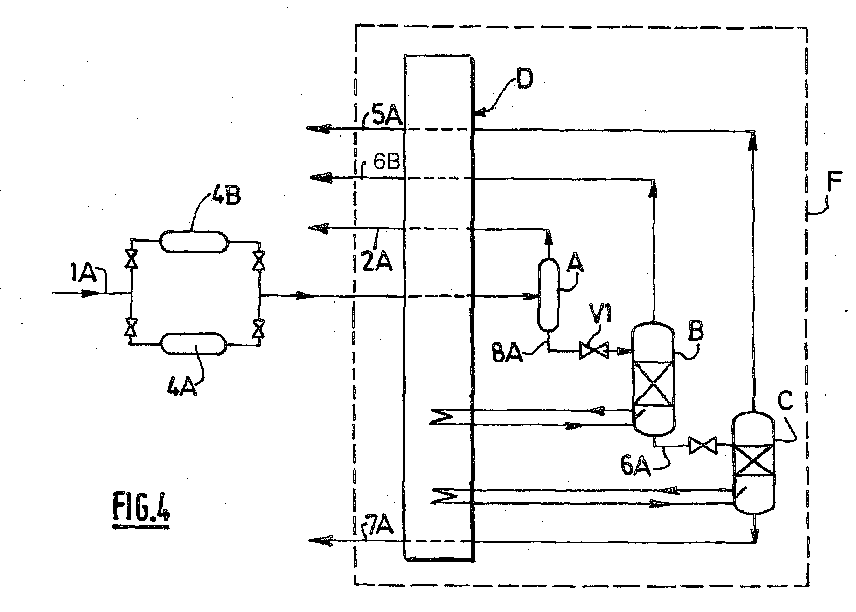

L'invention peut être effectuée dans un appareil de production de monoxyde de carbone par condensation partielle, comme illustré dans la Figure 4. Un débit de gaz de synthèse épuré 1 A provenant de l'unité d'adsorption 4A, 4B rentre dans la boîte froide F, se refroidit dans un échangeur D et se liquéfie partiellement. Les phases se séparent dans un séparateur de phases A qui constitue la capacité selon l'invention. Le gaz 2A du séparateur de phases riche en hydrogène est envoyé à l'échangeur D. Régulé par une vanne V1, le liquide 8A du séparateur de phases est envoyé à une première colonne d'épuisement B où il se sépare en un débit riche en hydrogène 6B qui se réchauffe dans l'échangeur D. Le liquide 6A est détendu et envoyé à une deuxième colonne d'épuisement qui produit comme gaz de tête un gaz 5A riche en monoxyde de carbone et comme liquide de cuve un liquide 7A riche en méthane.

Un détecteur de niveau de liquide dans la capacité A pilote l'ouverture de la vanne V1 amenant le liquide 8A vers la première colonne d'épuisement B. En dehors des phases d'élution, le débit gazeux épuré 1A envoyé à la capacité A est constant. Au moins pendant que l'un des absorbeurs est en phase d'adsorption et l'autre est en phase de régénération, le débit 8A sortant de la capacité 7 est régulé de sorte que le niveau de liquide augmente, comme on le voit sur la Figure 2. Pendant les phases d'élution, le débit de mélange gazeux épuré 1A diminue et ce débit 1A est appauvri en monoxyde de carbone par rapport au débit pendant le reste du cycle. Le soutirage du liquide 8A est augmenté au moins pendant une partie de chaque phase d'élution, de préférence au début de chaque phase d'élution, de sorte que le niveau de liquide dans le stockage baisse. Ce niveau remontera à nouveau à partir de l'étape suivante, lorsque le débit de gaz à traité sera réparti à 50% entre les adsorbeurs 4A et 4B, et par la suite au moins pendant que l'un des adsorbeurs est en phase d'adsorption.

## Revendications

1. Procédé de production de monoxyde de carbone et éventuellement d'hydrogène par séparation d'un mélange gazeux comprenant une étape de séparation par adsorption suivie d'une étape de séparation cryogénique dans lequel :
i) pendant l'étape d'adsorption, on utilise N adsorbeurs (4A, 4B), avec N supérieur ou égal à deux, qui suivent chacun en décalage un même cycle de période T, durant lequel se succèdent une phase d'adsorption et une phase de régénération et en ce que l'on soumet chaque adsorbeur en début de phase d'adsorption à une phase d'élution pendant laquelle seulement une partie du débit nominal du mélange est envoyé à l'adsorbeur jusqu'à ce que celui-ci soit sensiblement saturé en monoxyde de carbone, tout en maintenant au moins un autre adsorbeur en phase d'adsorption
ii) **caractérisé en ce que** pendant tout le cycle on liquéfie partiellement le mélange gazeux épuré pour produire du mélange gazeux liquéfié, on le stocke dans une capacité (7,A) et on envoie du mélange gazeux liquéfié de la capacité à au moins une colonne (11,B) pour être séparé en un fluide riche en monoxyde de carbone et pendant au moins une partie des phases d'élution des adsorbeurs, le niveau de liquide dans la capacité baisse et pendant au moins une partie du cycle en dehors des périodes d'élution ce niveau augmente.

2. Procédé selon la revendication 1 dans lequel la capacité est constituée par la partie inférieure d'une colonne de séparation cryogénique (9).

3. Procédé selon la revendication 1 ou 2 dans lequel le niveau de mélange gazeux liquéfié contenu dans la capacité augmente pendant tout le cycle en dehors de la phase d'élution et/ou le niveau de mélange gazeux liquéfié contenu dans la capacité baisse uniquement pendant les phases d'élution.

4. Procédé selon la revendication 1 ou 2 dans lequel le mélange gazeux contient au moins du monoxyde de carbone, de l'hydrogène et du méthane, une partie du mélange gazeux épuré est envoyé à une colonne de lavage au méthane (9), un gaz enrichi en hydrogène est soutiré en tête de la colonne de lavage au méthane, un liquide enrichi en monoxyde de carbone est envoyé de la colonne de lavage au méthane en tête d'une colonne d'épuisement (11), un liquide riche en monoxyde de carbone est soutiré en cuve de la colonne d'épuisement et envoyé à une colonne de séparation de monoxyde de carbone et de méthane (13), un liquide riche en méthane est soutiré en cuve de la colonne de séparation de monoxyde de carbone et de méthane et envoyé au moins en partie en tête de la colonne de lavage au méthane et un débit gazeux riche en monoxyde de carbone est soutiré de la tête de la colonne de séparation de monoxyde de carbone et de méthane.

5. Procédé selon la revendication 4 dans lequel du mélange gazeux liquéfié est envoyé de la capacité (7) à la colonne d'épuisement (11).

6. Procédé selon l'une des revendications 4 ou 5 dans lequel le volume de liquide riche en méthane dans la cuve (18) de la colonne de séparation de monoxyde de carbone et de méthane (13) diminue pendant au moins une partie du cycle en dehors des phases d'élution et ce volume augmente pendant au moins une partie des phases d'élution.

7. Procédé selon l'une des revendications 4, 5 ou 6 dans lequel le volume de liquide riche en monoxyde de carbone dans la cuve (18) de la colonne d'épuisement diminue pendant au moins une partie du cycle en dehors des phases d'élution et/ou ce volume augmente pendant au moins une partie des phases d'élution.

## Claims

1. Method for producing carbon monoxide and, optionally, hydrogen by separating a gas mixture, comprising an adsorption separation step followed by a cryogenic separation step in which:
i) during the adsorption step, N adsorbers (4A, 4B) are used, with N greater than or equal to two, which each follow, in a staggered sequence, the same cycle of time T, during which an adsorption phase and a regeneration phase occur in succession, and, at the start of the adsorption phase, each adsorber is subjected to an elution phase during which only part of the nominal flow of the mixture is sent to the adsorber until it is substantially saturated with carbon monoxide, while maintaining at least one other adsorber in an adsorption phase;
ii) **characterised in that** throughout the cycle, the purified gas mixture is liquefied in part to produce a liquefied gas mixture, said mixture is stored in a vessel (7, A) and the liquefied gas mixture is sent from the vessel to at least one column (11, B) to be separated into a carbon-monoxide-rich fluid and, during at least part of the adsorber elution phases, the liquid level in the vessel drops and, during at least part of the cycle outside the elution phases, said level rises.

2. Method according to claim 1, wherein the vessel consists of the bottom part of a cryogenic separation column (9).

3. Method according to either claim 1 or claim 2, wherein the level of the liquefied gas mixture in the vessel rises throughout the cycle outside the elution phase and/or the level of the liquefied gas mixture in the vessel drops only during the elution phases.

4. Method according to either claim 1 or claim 2, wherein the gas mixture contains at least carbon monoxide, hydrogen and methane, part of the purified gas mixture is sent to a methane scrubber (9), a hydrogen-enriched gas is tapped off at the top of the methane scrubber, a carbon-monoxide-enriched liquid is sent from the methane scrubber to the top of a stripper (11), a carbon-monoxide-rich liquid is tapped off from the tank of the stripper and sent to a carbon monoxide and methane separator (13), a methane-rich liquid is tapped off from the tank of the carbon monoxide and methane separator and sent at least in part to the top of the methane scrubber, and a carbon-monoxide-rich gas flow is tapped off at the top of the carbon monoxide and methane separator.

5. Method according to claim 4, wherein the liquefied gas mixture is sent from the vessel (7) to the stripper (11).

6. Method according to either claim 4 or claim 5, wherein the volume of methane-rich liquid in the tank (18) of the carbon monoxide and methane separator (13) decreases during at least part of the cycle outside the elution phases, and said volume increases during at least part of the elution phases.

7. Method according to any of claims 4, 5 or 6, wherein the volume of carbon-monoxide-rich liquid in the tank (18) of the stripper decreases during at least part of the cycle outside the elution phases and/or said volume increases during at least part of the elution phases.

## Patentansprüche

1. Verfahren zur Herstellung von Kohlenmonoxid und gegebenenfalls Wasserstoff durch Trennung eines Gasgemisches, umfassend einen Schritt der Trennung durch Adsorption, gefolgt von einem Schritt der Kryotrennung, wobei:
i) während des Schritts der Adsorption N Adsorber (4A, 4B) verwendet werden, wobei N größer oder gleich zwei ist, die versetzt jeweils ein und denselben Periodenzyklus T durchlaufen, während dessen eine Adsorptions- und eine Regenerationsphase aufeinander folgen, und wobei jeder Adsorber zu Beginn der Adsorptionsphase einer Elutionsphase unterzogen wird, während der nur ein Teil des Nenndurchflusses des Gemisches an den Adsorber geleitet wird, bis dieser im Wesentlichen mit Kohlenmonoxid gesättigt ist, wobei gleichzeitig mindestens ein weiterer Adsorber in der Adsorptionsphase gehalten wird,
ii) **dadurch gekennzeichnet, dass** während des gesamten Zyklus das gereinigte Gasgemisch teilweise verflüssigt wird, um verflüssigtes Gasgemisch herzustellen, des Gemisch in einem Speicherbehälter (7, A) gelagert wird und verflüssigtes Gasgemisch von dem Speicherbehälter an mindestens eine Kolonne (11, B) geleitet wird, um in eine an Kohlenmonoxid reiche Flüssigkeit getrennt zu werden, und während mindestens eines Teils der Elutionsphasen der Adsorber der Flüssigkeitspegel in dem Speicherbehälter abnimmt und während mindestens eines Teils des Zyklus außerhalb der Elutionsperioden der Flüssigkeitspegel zunimmt.

2. Verfahren nach Anspruch 1, wobei der Speicherbehälter von dem unteren Teil einer Kolonne zur Kryotrennung (9) gebildet ist.

3. Verfahren nach Anspruch 1 oder 2, wobei der Pegel des in dem Speicherbehälter enthaltenen verflüssigten Gasgemisches während des gesamten Zyklus außerhalb der Elutionsphase zunimmt und/oder der Pegel des in dem Speicherbehälter enthaltenen verflüssigten Gasgemisches nur während der Elutionsphasen abnimmt.

4. Verfahren nach Anspruch 1 oder 2, wobei das Gasgemisch zumindest Kohlenmonoxid, Wasserstoff und Methan enthält, ein Teil des gereinigten Gasgemisches an eine Kolonne zur Reinigung mit Methan (9) geleitet wird, ein mit Wasserstoff angereichertes Gas am Kopf der Kolonne zur Reinigung mit Methan abgezogen wird, eine mit Kohlenmonoxid angereicherte Flüssigkeit von der Kolonne zur Reinigung mit Methan in den Kopf einer Abstreifkolonne (11) geleitet wird, eine mit Kohlenmonoxid angereicherte Flüssigkeit aus dem Sumpf der Abstreifkolonne abgezogen wird und an eine Kolonne zur Trennung von Kohlenmonoxid und Methan (13) geleitet wird, eine an Methan reiche Flüssigkeit aus dem Sumpf der Kolonne zur Trennung von Kohlenmonoxid und Methan abgezogen wird und zumindest teilweise in den Kopf der Kolonne zur Reinigung mit Methan geleitet wird und ein an Kohlenmonoxid reicher gasförmiger Strom aus dem Kopf der Kolonne zur Trennung von Kohlenmonoxid und Methan abgezogen wird.

5. Verfahren nach Anspruch 4, wobei verflüssigtes Gasgemisch von dem Speicherbehälter (7) an die Abstreifkolonne (11 ) geleitet wird.

6. Verfahren nach einem der Ansprüche 4 oder 5, wobei das an Methan reiche Flüssigkeitsvolumen in dem Sumpf (18) der Kolonne zur Trennung von Kohlenmonoxid und Methan (13) zumindest während eines Teils des Zyklus außerhalb der Elutionsphasen abnimmt und dieses Volumen zumindest während eines Teils der Elutionsphasen zunimmt.

7. Verfahren nach einem der Ansprüche 4, 5 oder 6, wobei das an Kohlenmonoxid reiche Flüssigkeitsvolumen in dem Sumpf (18) der Abstreifkolonne zumindest während eines Teils des Zyklus außerhalb der Elutionsphasen abnimmt und/oder dieses Volumen zumindest während eines Teils der Elutionsphasen zunimmt.
